# EUROPÄISCHE PATENTSCHRIFT

(11) **EP 2 591 660 B1**
(45) Veröffentlichungstag und Bekanntmachung des Hinweises auf die Patenterteilung: **25.11.2015**
(21) Anmeldenummer: 12007632.8
(22) Anmeldetag: 09.11.2012
(51) Int. Cl.: A01D 75/28, A01D 33/00

(54) **Erntemaschine für insbesondere Hackfrüchte**
Harvester, in particular for root crops
Machine de récolte en particulier pour plantes sarclées

(30) Priorität: 11.11.2011 DE 102011118205
(43) Veröffentlichungstag der Anmeldung: 15.05.2013
(73) Patentinhaber: Grimme Landmaschinenfabrik GmbH & Co. KG, 49401 Damme (DE)
(72) Erfinder: Kalverkamp, Klemens, 49401 Damme (DE)
(74) Vertreter: Deters, Frank

(56) Entgegenhaltungen:
- FR-A- 1 569 021
- GB-A- 1 039 659
- GB-A- 1 189 705

## Beschreibung

Die Erfindung betrifft eine Erntemaschine für Hackfrüchte wie Kartoffeln, Rüben o. dgl. Erntegut gemäß dem Oberbegriff des Anspruchs 1.

Erntemaschinen für Hackfrüchte sind in unterschiedlichen Ausführungsformen als von einem Schlepper o. dgl. gezogene Konstruktionen oder sogenannte Selbstfahrer bekannt. In DE 93 20 575.9 U1, EP 1 880 591 A1 und DE 10 2007 034 446 A1 sind unterschiedliche Ausführungen und Konstruktionen von Kartoffelerntemaschinen gezeigt. Den technischen Entwicklungen mit zunehmenden Überwachungen des erzeugten Erntegutstromes folgend, werden in die Erntemaschinen zunehmend entsprechende Steuerungs- und Überwachungsbaugruppen integriert. In DE 93 20 576.7 U1 wurde bereits eine Überwachung der Betriebsparameter mittels an den Rodeaggregaten wirkender Messvorrichtungen vorgeschlagen. Allgemein bekannt ist auch, in die vorbeschriebenen Erntemaschinen jeweilige Neigungssensoren o. dgl. Aufnehmer zu integrieren, so dass in Hanglagen eine horizontale Ausrichtung der Aggregate mittels entsprechender Stellglieder möglich ist und das Erntegut in einem optimalen Produktstrom bearbeitet werden kann. In GB 1,189,705 wird ein hydro-mechanisches System vorgeschlagen, bei dem eine zentrale Pendelabstützung vorgesehen ist. Mit dieser kann eine mit Steuerkugeln zusammenwirkende hydraulische Ventileinheit entsprechend der jeweiligen "Pendelbewegung" gesteuert werden. Ähnliche Stellsysteme sind in GB 1,039,659 und FR 1.569.021 gezeigt.

Es hat sich jedoch gezeigt, dass aus dem praktischen Einsatz - insbesondere dem Überfahren unebener Bodenstrukturen auf dem Feld - störende Anregungen auf das komplexe Massen-System der Erntemaschine resultieren und diese in Schwingungen versetzt wird, so dass der Erntevorgang bzw. die dabei erreichbare Geschwindigkeit nachteilig beeinflusst ist.

Die Erfindung befasst sich mit dem Problem, eine Erntemaschine in Form einer Kartoffel- oder Rübenerntemaschine zu schaffen, bei der die Fahrgeschwindigkeit auch bei Überfahren unebener Bodenstrukturen beibehalten werden kann und mit geringem technischem Aufwand eine nachteilige Beeinflussung des Aushebe- und Sammelvorgangs des Erntegutes weitgehend ausgeschlossen ist.

Die Erfindung löst diese Aufgabe durch eine Erntemaschine mit den Merkmalen des Anspruchs 1. Hinsichtlich weiterer vorteilhafter Ausgestaltungen wird auf die Ansprüche 2 bis 15 verwiesen.

Die jeweilige Ernte- und Siebaggregate, Sammelbunker u. dgl. Aufbauten aufweisende Erntemaschine ist erfindungsgemäß dadurch verbessert, dass im Bereich des Maschinenrahmens eine insbesondere quer zur Fahrtrichtung wirkende Maschinenbewegung, nämlich Querneigungen, Schwankungen, Pendelbewegungen o. dgl., erfassende und diesen aktiv entgegenwirkende Regelvorrichtung vorgesehen ist. Die Bewegungen werden sensorisch erfasst, und mittels einer die Signale verarbeitenden Steuerung wird dann ein Stellorgan so geregelt, dass die vorgesehenen optimalen Arbeitsbedingungen im Bereich der Aufbauten der Erntemaschine eingehalten werden.

Vorteilhaft kann die Erntemaschine bereits dadurch verbessert werden, dass diese im Bereich zwischen dem Maschinenrahmen und einer die Stützräder aufnehmenden Tragachse einen zumindest einen Drucksensor aufweisenden Stellzylinder aufweist und dieser mit einer hydraulischen bzw. elektrischen Steuerung zusammenwirkt. Damit wird erreicht, dass durch Fahranregungen über die Stützräder in das Maschinensystem eingetragene Schwingungen erfassbar und aktiv beeinflussbar sind. Der Stellzylinder, der Drucksensor und die Steuerung bilden dabei eine überraschend effektive Funktionseinheit an einer Erntemaschine, so dass auf unebenem Fahrgelände eingeleitete Fahranregungen und Schwingungen ausgleichbar sind und/oder mittels einer Gegenkraft bzw. eines Gegenmoments automatisch auf einen Grenzwert reduziert werden.

Damit wird eine Überwachungseinheit vorgeschlagen, bei der der mit Drucksensoren versehene Stellzylinder als aktiver Schwingungstilger eingesetzt werden kann. In vorteilhafter Ausführung ist vorgesehen, dass als dieser aktive Stellzylinder ein an sich bereits in den bekannten Maschinenkonzepten vorhandener Neigungs-Stellzylinder angepasst und dieser damit "doppelt" genutzt wird. Ebenso ist denkbar, dass der als Schwingungstilger wirksame Stellzylinder als eine zusätzliche Baugruppe in das System der Erntemaschine integriert wird.

Es versteht sich, dass an Stelle des als Aufnehmer der Bauteilbewegungen und/oder Deformationen vorgesehenen Drucksensors auch ein Beschleunigungssensor, ein Kraftmesser o. dgl. elektrische Wandler vorgesehen sein kann.

Zur automatischen Steuerung des Stellzylinders ist vorgesehen, dass mittels eines insbesondere als elektromagnetisches Proportionalventil ausgebildeten Stetigventils der Ölvolumenstrom beeinflusst werden kann. Denkbar ist auch, dass der Stellzylinder über eine computergestützte Steuerung und entsprechende Programme mit einem Regventil oder einem Servoventil verbunden ist. Vorgesehen ist, dass jeweilige analoge Signale des zumindest einen Drucksensors in einer Steuereinheit verarbeitet werden und danach mittels deren Ausgangssignal das Proportionalventil digital angesteuert wird.

Das steuer- bzw. regelbare System sieht vor, dass vorteilhaft im Bereich des Stellzylinders zwei Drucksensoren installiert werden. Dabei sind die beiden Drucksensoren jeweils an einer Kolbenseite bzw. einer Ringseite des Stellzylinders angeordnet, so dass mittels des Stellzylinders sowohl Druck- als auch Zugkräfte (als Resultat der Fahranregungen) erfassbar sind. Damit wird deutlich, dass mittels des bzw. der Stellzylinder(s) jeweilige Fahranregungen in Form von oszillierenden Bewegungen im gesamten Bereich der Aufbauten der Maschine erkennbar sind. Entsprechend dem Steuerungskonzept wird für diese Fahranregungen dann ein zulässiger Grenzwert definiert, so dass bei dessen Erreichen eine entsprechende Gegensteuerung mittels des als Schwingungstilger wirksamen Stellzylinders eingeleitet werden kann. Damit weist die Erntemaschine eine elektromechanische Schwingungsdämpfung nach Art einer hydraulischen "Zusatz-Federung" auf, die mit einem automatisch wirksamen Regelkreis versehen ist.

Vorteilhaft wird eine aus den Messsignalen der Drucksensoren ableitbare Schwingungsamplitude als Anregungs-Grenzwert vorgesehen. Damit kann mittels der Steuerung ein jeweiliger Sollwert für die Ansteuerung des Proportionalventils vorgegeben werden. Dieses Proportionalventil ist dabei effizient eingesetzt, da nicht nur diskrete Schaltstellungen genutzt werden können, sondern durch einen stetigen Übergang der jeweiligen Ventilöffnungen auch linear veränderliche Volumenströme möglich sind. Das Steuerungskonzept kann auch so ausgelegt werden, dass als Grenzwert ein jeweiliger zeitlicher Ablauf von Druckschwankungen im Bereich des Stellzylinders erfasst wird und daraus der jeweilige Sollwert für entsprechende Ventil-Ansteuerungen mittels des Steuerprogramms vorgegeben wird.

Ausgehend davon, dass im Bereich des Maschinenrahmens bereits die Anwendung von Neigungssensoren bekannt ist, sieht das erfindungsgemäße Konzept vor, dass im Bereich der programmierbaren Steuerung das jeweilige Ausgangssignal des Neigungssensors effizient mit den Ausgangssignalen der beiden Drucksensoren verknüpft werden kann. Daraus resultiert, dass bei Erfassung einer Abweichung zur vorgebbaren Neigungs-Sollposition gleichzeitig eine Verschiebung der Ansteuerzeiten im Bereich des Proportionalventils möglich ist. Bei einer von der horizontalen Ausgangslage abweichenden Neigungsänderung der Erntemaschine kann damit eine gezielte Verschiebung des jeweiligen Sollwertes für den Anregungs-Grenzwert des Stellzylinders durchgeführt werden und damit auch in unebenem Gelände die Maschinensteuerung an einen optimalen Ernteprozess angepasst werden.

Das vorbeschriebene, weitgehend automatisierbare Steuerungskonzept für die vorbeschriebene Erntemaschine ist mit einer Software bzw. einem Steuerprogramm versehen, womit die an sich bekannte Neigungsautomatik weitgehend in die mittels des zumindest einen Stellzylinders aktivierbare Schwingungstilgung integriert werden kann und damit ein besonders effizientes Bedienungskonzept erreicht ist.

Die vorbeschriebene Überwachung und automatische Tilgung von aus der Fahranregung resultierenden Schwingungen im Bereich einer Erntemaschine kann auch dadurch verbessert sein, dass im Bereich des Maschinenrahmens mehrere mit der hydraulischen Steuerung durch Sensoren und das Steuerprogramm verbundene Stellzylinder vorgesehen sind.

Weitere Einzelheiten und vorteilhafte Ausgestaltungen der erfindungsgemäßen Erntemaschine ergeben sich aus der nachfolgenden Beschreibung und der Zeichnung. In der Zeichnung zeigen:
- Fig. 1: eine perspektivische Vorderansicht einer als Anhängekonstruktion vorgesehenen Kartoffelerntemaschine mit Rodeaggregaten und Sammelbunker,
- Fig. 2: eine Rückansicht der Kartoffelerntemaschine gemäß Fig. 1 im Bereich zweier rückseitiger Stützräder,
- Fig. 3: eine vergrößerte Ausschnittsdarstellung ähnlich Fig. 2 mit mehreren im Bereich des Maschinenrahmens vorgesehenen Sensoren, und
- Fig. 4: ein Diagramm der mit Drucksensoren erfassten Kräfte im Bereich eines Stellzylinders.

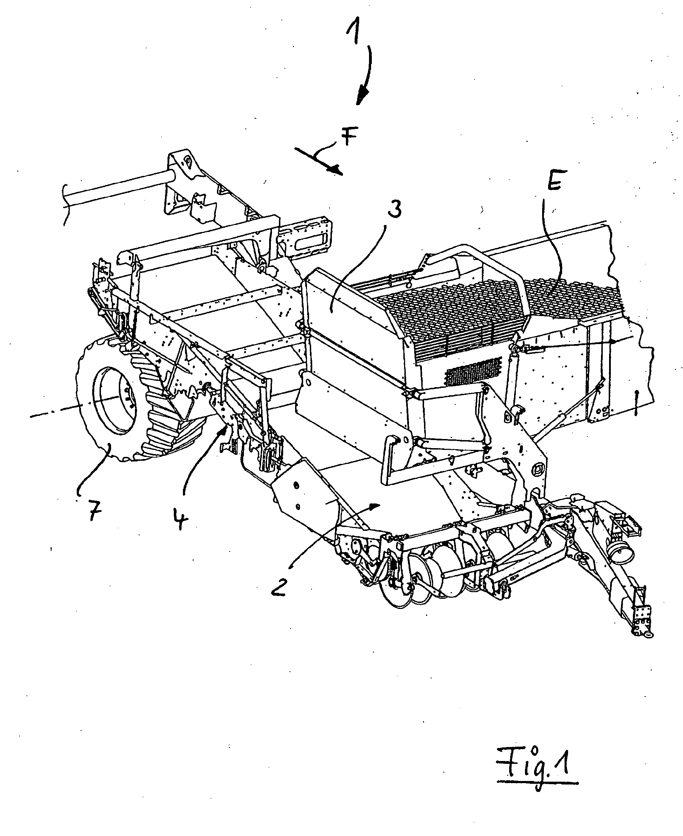

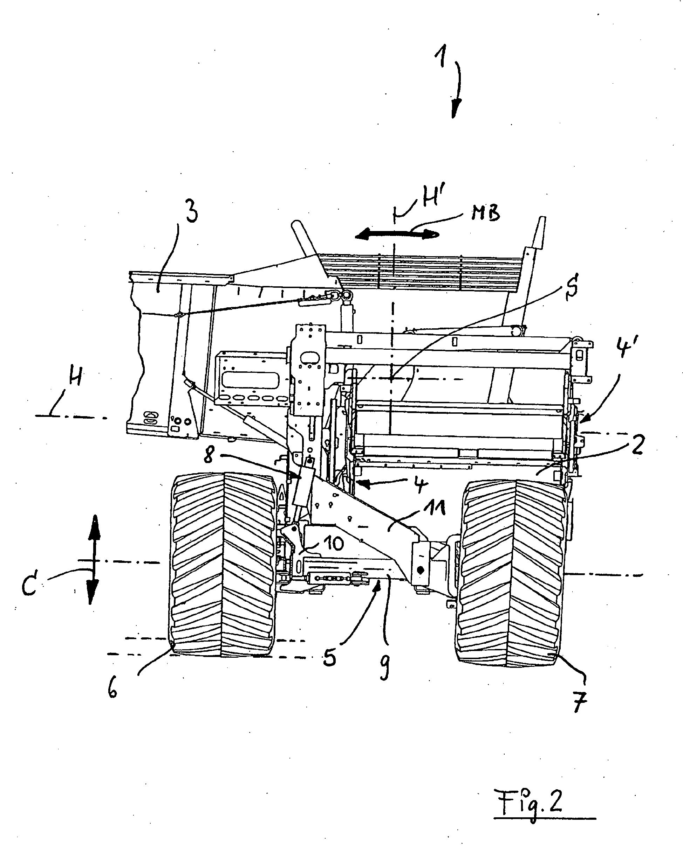

In Fig. 1 ist eine insgesamt mit 1 bezeichnete Erntemaschine für Hackfrüchte wie Kartoffeln, Rüben o. dgl. Erntegut E dargestellt. Diese von einem Schlepper (nicht dargestellt) gezogene Ausführungsform der Erntemaschine 1 weist einen jeweilige Ernte- und Siebaggregate 2, einen Sammelbunker 3 u. dgl. Aufbauten tragenden Maschinenrahmen 4 auf. Im heckseitigen Bereich dieses Maschinenrahmens sind zur bodenseitigen Abstützung zumindest zwei mit einer Tragachse 5 verbundene Stützräder 6, 7 vorgesehen (Fig. 2).

Das erfindungsgemäß verbesserte Konzept der Erntemaschine 1 sieht vor, dass zwischen dem Maschinenrahmen 4 und der Tragachse 5 im Nahbereich zumindest eines der Stützräder 6, 7 (Fig. 2) ein im Bereich von Druckleitungen zumindest einen Drucksensor A, B aufweisender Stellzylinder 8 vorgesehen ist. Der Stellzylinder 8 ist dabei einerseits mit der als Achsrohr 9 ausgebildeten Tragachse 5 mittels eines Flanschteiles 10 verbunden, und andererseits greift der Stellzylinder 8 im Bereich eines Chassisteils 11 am Maschinenrahmen 4 an. Dieser weist einen oberen Hauptrahmen 4' auf, der während des Einsatzes der Maschine 1 mit möglichst geringen Verlagerungen in Bezug auf eine horizontale Ebene H zu bewegen ist, so dass Kippungen um den Schwerpunkt S bzw. die vertikale Hochachse H' vermieden sind.

Mit dieser Bauteilkombination wird erreicht, dass im Bereich des Maschinenrahmens 4, 4' zumindest jeweilige quer zur Fahrtrichtung wirkende Maschinenbewegungen MB sensorisch erfasst werden. Mittels der eine Steuerung D aufweisenden Regelvorrichtung kann dann das vom Stellglied 8 gebildete Stellorgan so aktiviert werden, dass Querbewegungen, Pendelbewegungen, Schwankungen, Querneigungen, ein Aufschaukeln des Systems u. dgl. Folgen der Maschinennutzung entgegengewirkt werden kann.

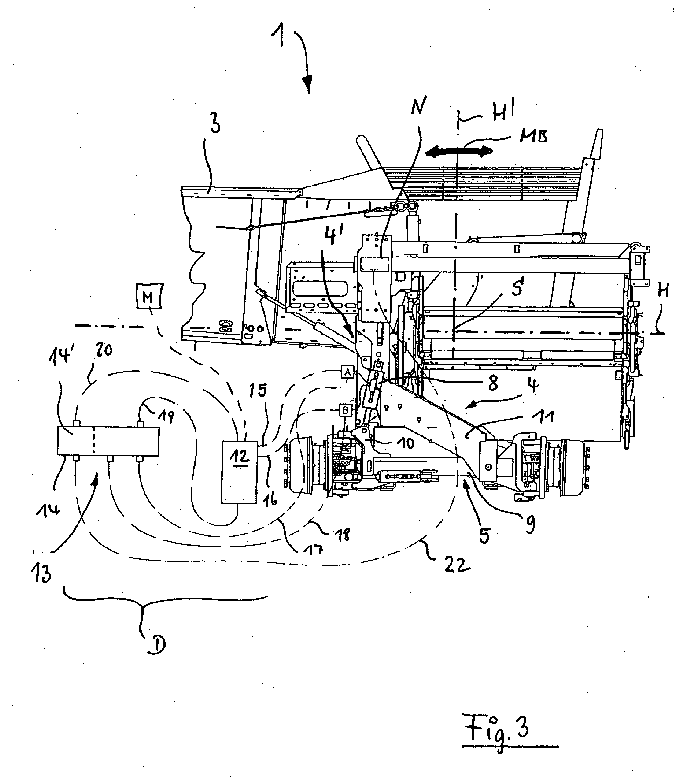

Bei der dargestellten Ausführung von Erntemaschinen 1 in Form einer gezogenen Kartoffelrodemaschine sind bereits Stellkomponenten in Form eines so genannten "Neigungs-Zylinders" bekannt, der mit ebenfalls bekannten Neigungssensoren N (Fig. 3) zusammenwirken kann.

Der gemäß der Erfindung im neuen Wirkzusammenhang vorgesehene Stellzylinder 8 ist so konzipiert, dass jeweilige insbesondere von den Stützrädern 6, 7 in den Bereich des Maschinenaufbaus 4, 4' übertragene Fahranregungen (Pfeil C, Fig. 2) erfassbar und mittels einer dem Stellzylinder 8 zugeordneten Steuerung D (Prinzipdarstellung, Fig. 3) aktiv beeinflussbar sind. Wie aus der Zusammenschau von Fig. 2 und Fig. 3 ersichtlich, wird in effektiver Umsetzung des Konzeptes der bereits in der Maschine 1 vorhandene Neigungs-Stellzylinder so angepasst, dass der eine dargestellte Stellzylinder 8 nunmehr eine "Doppelfunktion" aufweist.

Die konstruktive Gestaltung im Bereich des Stellzylinders 8 sieht vor, dass zur Steuerung des von einem Hydraulikmotor M (beispielsweise im Bereich des Schleppers) ausgehenden Ölvolumenstroms ein insbesondere als elektromagnetisches Proportionalventil 12 ausgebildetes Stetigventil vorgesehen ist, das über die beiden Sensoren A, B mit einer digitalen Steuereinheit 13 in Form eines Mikroprozessors, eines Rechners o. dgl. (Fig. 3) zusammenwirkt. Damit wird erreicht, dass die jeweiligen analogen Signale der Drucksensoren A, B insbesondere über elektrische Verbindungsleitungen 17, 18 zu der Steuereinheit 13 übertragen und danach über ein internes Steuerprogramm 14 das Proportionalventil 11 über Leitungen 19, 20 ansteuerbar sind.

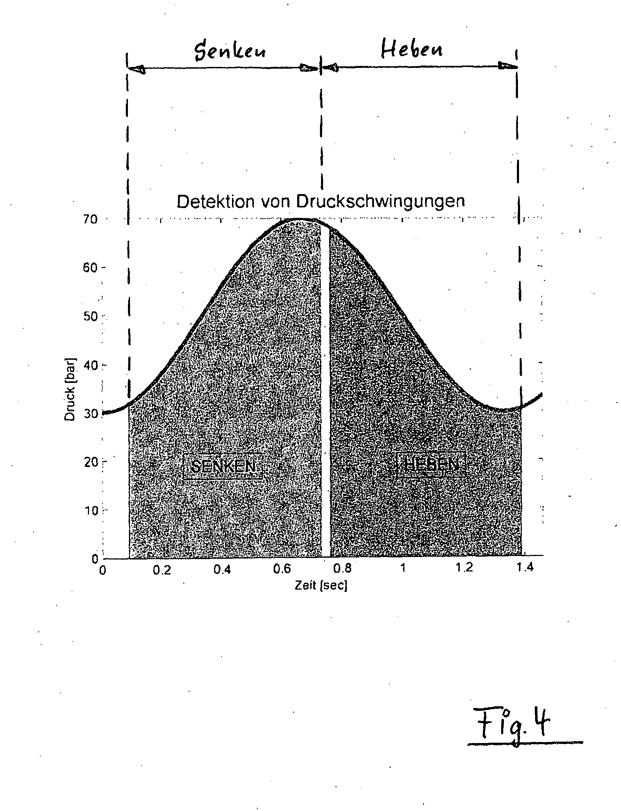

Die bevorzugte Ausführung des multifunktionalen Stellzylinders 8 sieht vor, dass dieser mit zwei Drucksensoren A, B versehen ist, wobei diese jeweils an einer Kolbenseite bzw. einer Ringseite des Stellzylinders 8 wirksam sind. Damit wird erreicht, dass mittels des Stellzylinders 8 sowohl Druck- als auch Zugkräfte aus dem Bereich des Stützrades 6 (Pfeil C) erfassbar und über die Leitungen 17, 18 an die Steuereinheit 14 übermittelbar sind. Aus der Zusammenschau der vorbeschriebenen Baugruppen wird deutlich, dass mittels der Sensoren A, B des bzw. der Stellzylinder(s) 8 jeweilige Fahranregungen in Form von oszillierenden Bewegungen (Pfeil C) im Bereich der Aufbauten der Maschine 1 erfassbar und für jeweilige aus diesen Fahranregungen resultierende Schwingungen (Fig. 4) ein maschinentypisch zulässiger Grenzwert definiert werden kann. Beim Erfassen einer oszillierenden Maschinenbewegung wird das Proportionalventil 12 so aktiviert, dass den detektierten Schwingungen entgegengewirkt wird und ein "Aufschaukeln" der Maschine 1 bzw. deren Komponenten (sich füllender Bunker 3) vermieden ist.

Vorteilhaft ist eine aus den Messsignalen der Drucksensoren A, B ableitbare Schwingungsamplitude (Fig. 4, Kurve 21) als Anregungsgrenzwert vorgesehen, derart, dass mittels der Steuerung 14 ein jeweiliger Sollwert für die Ansteuerung des elektromagnetischen Proportionalventils 12 vorgebbar ist. Denkbar ist auch, dass als Grenzwert ein jeweiliger zeitlicher Ablauf von Druckschwankungen (Fig. 4, Achse Z) erfasst wird und daraus der jeweilige Sollwert für Ventil-Ansteuerungen abgeleitet wird. Die Regelung im Bereich des Ventils 12 bzw. des Stellzylinders 8 ist so abgestimmt, dass beispielsweise bei ansteigendem Druck ("Bodenwelle" mit Hubbewegung bei C) im Bereich des Stellzylinders 8 eine "Ausweichbewegung" durch ein Absenken des Fluiddruckes auf einer Kolbenseite möglich ist. Damit kann ein "Aufschaukeln" des Systems vermieden werden.

Aus Fig. 3 ist ersichtlich, dass im Bereich des Maschinenrahmens 4, 4' ein zusätzlicher Neigungssensor N installiert ist. Dessen Ausgangssignal wird mittels einer Leitung 22 im Bereich der programmierbaren Steuerung 14 mit den Ausgangssignalen 17, 18 der Drucksensoren A, B zusammengeführt. Über eine effiziente Programmierung im Bereich der Steuerung 14 wird erreicht, dass bei Erfassung einer Abweichung von einer vorgebbaren Neigungs-Sollposition (Ebene H, Fig. 2) mittels der Steuerung 14 die Ansteuerzeiten (Fig. 4, Achse Z) im Bereich des Proportionalventils 12 verschoben bzw. geändert werden. Dabei kann das Programm auch so eingestellt werden, dass bei einer Neigungsänderung der Erntemaschine 1 der jeweilige Sollwert für den Anregungsgrenzwert (Fig. 4, Kurve 21) mit dem Steuerprogramm 14' gezielt geändert wird. Insbesondere sieht das kombinierbare Sensorsystem vor, dass Neigungsinformationen (Abweichungen des Hauptrahmens 4' aus der Lage H = ± 0) und mehrmalige Messwertänderungen im Bereich der Sensoren A, B eine Schwingbewegung eindeutig definieren können und dabei durch das Steuerprogramm entsprechende Ventilstellungen für das den Schwingungen entgegenwirkende Hydrauliksystem vorgegeben werden.

Aus dem vorbeschriebenen Zusammenwirken der Sensoren A, B und N wird deutlich, dass die komplexe Steuerung der vorbeschriebenen Erntemaschine 1 mit einer Software versehen ist, bei der die an sich bekannte Neigungsautomatik nunmehr weitgehend in die mittels des zumindest einen Stellzylinders 8 aktiverbare Schwingungstilgung integriert ist und damit der Bedienkomfort der Erntemaschine 1 weiter verbessert werden kann.

Die vorbeschriebene Erntemaschine 1 weist im Bereich des Maschinenrahmens 4, 4' lediglich den einen Stellzylinder 8 auf, wobei auch denkbar ist, mehrere mit der hydraulischen Steuerung D durch Sensoren und das Steuerprogramm verbundene Stellzylinder in das System zu integrieren. Ebenso ist denkbar, als sensorische Aufnehmer auch Beschleunigungssensoren, Deformations- bzw. Kraftmesser o. dgl. Wandler in das System zu integrieren und damit die vorbeschriebenen Steuer- bzw. Regelabläufe weiter zu optimieren.

## Patentansprüche

1. Erntemaschine für Hackfrüchte wie Kartoffeln, Rüben o. dgl. Erntegut (E), mit einem jeweilige Ernte- und Siebaggregate (2), Sammelbunker (3) u. dgl. Aufbauten tragenden Maschinenrahmen (4), an dem zur bodenseitigen Abstützung zumindest zwei mit einer Tragachse (5) verbundene Stützräder (6, 7) vorgesehen sind, dabei im Bereich des Maschinenrahmens (4, 4') eine zumindest jeweilige quer zur Fahrtrichtung (Ebene H') wirkende Maschinenbewegungen (MB) erfassende und diese mittels zumindest eines Stellorgans (Stellglied 8) aktiv beeinflussende Regelvorrichtung (Steuerung D) vorgesehen ist, wobei jeweilige insbesondere von den Stützrädern (6, 7) in den Bereich des Maschinenaufbaus übertragene Fahranregungen (C) erfassbar und mittels der dem Stellzylinder (8) zugeordneten Steuerung (D) aktiv beeinflussbar sind, **dadurch gekennzeichnet, dass** zwischen Maschinenrahmen (4) und Tragachse (5) im Nahbereich zumindest eines der Stützräder (6) ein zumindest einen als Drucksensor (A, B) ausgebildeten sensorischen Aufnehmer aufweisender Stellzylinder (8) vorgesehen ist.

2. Erntemaschine nach Anspruch 1, **dadurch gekennzeichnet, dass** das sensorisch steuerbare Stellorgan in Form des Stellzylinders (8) als ein Schwingungstilger wirksam ist.

3. Erntemaschine nach Anspruch 1 oder 2, **dadurch gekennzeichnet, dass** ein in an sich bekannte Maschinenkonzepte integrierter Neigungs-Stellzylinder als der eine Stellzylinder (8) nutzbar ist.

4. Erntemaschine nach einem der Ansprüche 1 bis 3, **dadurch gekennzeichnet, dass** zur Steuerung des Stellzylinders (8) dessen Teil-Ölvolumenströme (15, 16) mittels eines insbesondere als elektromagnetisches Proportionalventil (12) ausgebildeten Stetigventils beeinflussbar sind.

5. Erntemaschine nach einem der Ansprüche 1 bis 4, **dadurch gekennzeichnet, dass** jeweilige analoge Signale des Drucksensors (A, B) in einer programmierbaren Steuereinheit (14) verarbeitbar und mittels deren Ausgangssignal (19, 20) das Proportionalventil (12) digital ansteuerbar ist.

6. Erntemaschine nach einem der Ansprüche 1 bis 5, **dadurch gekennzeichnet, dass** im Bereich des Stellzylinders (8) zwei Drucksensoren (A, B) vorgesehen sind.

7. Erntemaschine nach einem der Ansprüche 1 bis 6, **dadurch gekennzeichnet, dass** die beiden Drucksensoren (A, B) jeweils an einer Kolbenseite bzw. einer Ringseite des Stellzylinders (8) angeordnet sind, derart, dass mittels des Stellzylinders (8) sowohl Druck- als auch Zugkräfte erfassbar und in der Steuereinheit (14) verarbeitbar sind.

8. Erntemaschine nach einem der Ansprüche 1 bis 7, **dadurch gekennzeichnet, dass** mittels der Sensoren (A, B) des bzw. der Stellzylinder(s) (8) jeweilige Fahranregungen in Form von oszillierenden Bewegungen (C) im Bereich der Aufbauten der
Maschine (1) erfassbar und für jeweilige aus diesen Fahranregungen resultierende Schwingungs-Daten ein maschinentypisch zulässiger Grenzwert definierbar ist.

9. Erntemaschine nach Anspruch 8, **dadurch gekennzeichnet, dass** eine aus den Messsignalen (17, 18) der Drucksensoren (A, B) ableitbare Schwingungsamplitude (21) als Anregungs-Grenzwert vorgesehen ist, derart, dass mittels der Steuerung (14) ein jeweiliger Sollwert für die Ansteuerung (19, 20) des elektromagnetischen Proportionalventils (12) vorgebbar ist.

10. Erntemaschine nach Anspruch 8 oder 9, **dadurch gekennzeichnet, dass** als Grenzwert ein jeweiliger zeitlicher Ablauf von Druckschwankungen (Z) erfasst wird und daraus der jeweilige Sollwert für Ventil-Ansteuerungen (19, 20) ableitbar ist.

11. Erntemaschine nach einem der Ansprüche 1 bis 10, **dadurch gekennzeichnet, dass** im Bereich des Maschinenrahmens (4, 4') zumindest ein zusätzlicher Neigungssensor (N) vorgesehen und dessen Ausgangssignal (22) im Bereich der programmierbaren Steuerung (14) mit den Ausgangssignalen (17, 18) der Drucksensoren (A, B) zusammengeführt ist.

12. Erntemaschine nach Anspruch 11, **dadurch gekennzeichnet, dass** diese eine vorgebbare Neigungs-Sollposition (H) aufweist und bei Erfassung von insbesondere quer zu dieser verlaufenden Abweichungen mittels der Steuerung (14) die Ansteuerzeiten (Z) im Bereich des Proportionalventils (12) verschiebbar bzw. veränderbar sind.

13. Erntemaschine nach Anspruch 11 oder 12, **dadurch gekennzeichnet, dass** bei einer Neigungsänderung der Erntemaschine (1) der jeweilige Sollwert für einen Anregungsgrenzwert (21) mittels des Steuerprogramms (14) gezielt verschiebbar ist.

14. Erntemaschine nach einem der Ansprüche 1 bis 13, **dadurch gekennzeichnet, dass** die Steuerung (14) der Maschine (1) mit einer Software versehen ist, bei der eine an sich bekannte Neigungsautomatik weitgehend in die mittels des zumindest einen Stellzylinders (8) aktivierbare Schwingungstilgung integriert ist.

15. Erntemaschine nach einem der Ansprüche 1 bis 14, **dadurch gekennzeichnet, dass** im Bereich des Maschinenrahmens (4, 4') mehrere mit der hydraulischen Steuerung (M) durch Sensoren (A, B) und das Steuerprogramm (14) verbundene Stellzylinder vorgesehen sind.

## Claims

1. Harvester for root crops such as potatoes, beets or similar crops (E), comprising a machine frame (4) which supports a respective harvesting- and sieving unit (2), collecting hopper (3) and similar structures, on which machine frame at least two support wheels (6, 7), connected to a supporting axle (5), are provided for support at the ground side, and a control device (control system D), which detects machine movements (MB) acting in each case transversely to the driving direction (plane H') and actively influences said movements by means of at least one control element (actuator 8), is provided in the region of the machine frame (4, 4'), it being possible to detect respective driving stimuli (C) transmitted in particular from the support wheels (6, 7) to the region of the machine structure and to actively influence said driving stimuli by means of the control system (D) assigned to the actuating cylinder (8), **characterised in that** an actuating cylinder (8), which comprises at least one sensory receiver in the form of a pressure sensor (A, B), is provided between the machine frame (4) and the supporting axle (5) in the vicinity of at least one of the support wheels (6).

2. Harvester according to claim 1, **characterised in that** the control element, which can be sensorially controlled and is in the form of the actuating cylinder (8), acts as an oscillation damper.

3. Harvester according to either claim 1 or claim 2, **characterised in that** a tilt-actuating cylinder, which is integrated in machine designs which are known per se, can be used as the actuating cylinder (8).

4. Harvester according to any of claims 1 to 3, **characterised in that**, for controlling the actuating cylinder (8), the partial volume flows (15, 16) of the oil of said actuating cylinder can be influenced by means of a proportional valve, in particular in the form of an electromagnetic proportional valve (12).

5. Harvester according to any of claims 1 to 4, **characterised in that** respective analogue signals from the pressure sensor (A, B) can be processed in a programmable control unit (14) and the proportional valve (12) can be digitally actuated by means of the output signal (19, 20) of said control unit.

6. Harvester according to any of claims 1 to 5, **characterised in that** two pressure sensors (A, B) are provided in the region of the actuating cylinder (8).

7. Harvester according to any of claims 1 to 6, **characterised in that** the two pressure sensors (A, B) are arranged on a piston side and a ring side respectively of the actuating cylinder (8) such that both compressive- and tensile forces can be detected by the actuating cylinder (8) and can be processed in the control unit (14).

8. Harvester according to any of claims 1 to 7, **characterised in that** respective driving stimuli, in the form of oscillating movements (C) in the region of the structures of the machine (1), can be detected by the sensors (A, B) of the actuating cylinder(s) (8) and a machine-typical reliable threshold value can be defined for the respective oscillation data resulting from said driving stimuli.

9. Harvester according to claim 8, **characterised in that** an oscillation amplitude (21), which can be derived from the measurement signals (17, 18) of the pressure sensors (A, B), is provided in the form of a stimulus threshold value such that a respective target value for activating (19, 20) the electromagnetic proportional valve (12) can be predefined by the control system (14).

10. Harvester according to either claim 8 or claim 9, **characterised in that** a respective evolution over time of pressure variations (Z) is detected as a threshold value and the respective target value for actuating (19, 20) the valve can be derived therefrom.

11. Harvester according to any of claims 1 to 10, **characterised in that** at least one additional tilt sensor (N) is provided in the region of the machine frame (4, 4'), and the output signal (22) of said tilt sensor is brought together with the output signals (17, 18) of the pressure sensors (A, B) in the region of the programmable control system (14).

12. Harvester according to claim 11, **characterised in that** said harvester has a predefinable tilt target position (H) and the actuation times (Z) in the region of the proportional valve (12) can be delayed or changed by means of the control system (14) when deviations, which occur in particular transversely to said tilt target position, are detected.

13. Harvester according to either claim 11 or claim 12, **characterised in that**, when the tilt of the harvester (1) is altered, the respective target value for a stimulus threshold (21) can be adjusted in a targeted manner by the control program (14).

14. Harvester according to any of claims 1 to 13, **characterised in that** the control system (14) of the machine (1) is provided with software in which an automatic tilt system, which is known per se, is, to a great extent, integrated in the oscillation damper which can be activated by the at least one actuating cylinder (8).

15. Harvester according to any of claims 1 to 14, **characterised in that** a plurality of actuating cylinders, which are connected to the hydraulic control system (M) by sensors (A, B) and the control program (14), are provided in the region of the machine frame (4, 4').

## Revendications

1. Machine de récolte pour plantes sarclées, telles que des pommes de terre, des navets ou des produits de récolte (E) similaires, comprenant un cadre de machine (4) qui porte respectivement des appareils de récolte et de tamisage (2), des blocs de collecte (3) et structures similaires, sur lequel sont prévues au moins deux roues-supports (6, 7) reliées à un essieu porteur (5) pour le support côté sol, un dispositif de régulation (commande D) étant prévu au niveau du cadre de machine (4, 4') pour saisir des mouvements (MB) de la machine qui agissent au moins respectivement transversalement à la direction de déplacement (plan H') et pour influencer ceux-ci activement au moyen d'au moins un actionneur (élément de commande 8), des suggestions de conduite (C) respectives, transmises en particulier par les roues-supports (6, 7) dans la zone de la structure de la machine, pouvant être saisies et influencées activement au moyen de la commande (D) associée au vérin de réglage (8),
**caractérisée en ce que**, entre le cadre de machine (4) et l'essieu porteur (5), à proximité immédiate d'au moins une des roues-supports (6), un vérin de réglage (8) est prévu et présente au moins un capteur sensoriel réalisé sous la forme d'un capteur de pression (A, B).

2. Machine de récolte selon la revendication 1, **caractérisée en ce que** l'actionneur commandable sensoriellement sous la forme du vérin de réglage (8) fonctionne comme un absorbeur de vibrations.

3. Machine de récolte selon la revendication 1 ou 2, **caractérisée en ce qu'**un vérin de réglage de l'inclinaison, intégré dans des concepts de machine connus en soi, peut être utilisé pour le vérin de réglage (8).

4. Machine de récolte selon une des revendications 1 à 3, **caractérisée en ce que**, pour commander le vérin de réglage (8), ses débits volumétriques d'huile partiels (1 5, 16) peuvent être influencés au moyen d'une vanne en continu réalisée en particulier sous la forme d'une vanne proportionnelle électromagnétique (12).

5. Machine de récolte selon une des revendications 1 à 4, **caractérisée en ce que** des signaux analogiques respectifs du capteur de pression (A, B) peuvent être traités dans une unité de commande programmable (14) et son signal de sortie (19, 20) permet d'actionner numériquement la vanne proportionnelle (12).

6. Machine de récolte selon une des revendications 1 à 5, **caractérisée en ce que** deux capteurs de pression (A, B) sont prévus au niveau du vérin de réglage (8).

7. Machine de récolte selon une des revendications 1 à 6, **caractérisée en ce que** les deux capteurs de pression (A, B) sont disposés respectivement sur un côté du piston ou un côté de la bague du vérin de réglage (8) de telle sorte que, au moyen du vérin de réglage (8), des forces à la fois de pression et de traction peuvent être saisies et être traitées dans l'unité de commande (14).

8. Machine de récolte selon une des revendications 1 à 7, **caractérisée en ce que**, au moyen des capteurs (A, B) du ou des vérin(s) de réglage (8), des suggestions de conduite respectives sous forme de mouvements oscillants (C) au niveau des structures de la machine (1) peuvent être saisies et, pour les données de vibrations respectives résultants de ces suggestions de conduite, une valeur seuil autorisée typique à la machine peut être définie.

9. Machine de récolte selon la revendication 8, **caractérisée en ce qu'**une amplitude de vibration (21) qui peut être dérivée des signaux de mesure (17, 18) des capteurs de pression (A, B) est prévue sous la forme d'une valeur seuil de suggestion, de telle sorte que, au moyen de la commande (14), une valeur théorique respective pour l'actionnement (19, 20) de la vanne proportionnelle électromagnétique (1 2) peut être fixée

10. Machine de récolte selon la revendication 8 ou 9, **caractérisée en ce qu'**une expiration temporelle respective peut être saisie par des fluctuations de pression (Z) pour servir de valeur seuil et la valeur théorique respective peut en être dérivée pour les actionnements de vanne (19, 20).

11. Machine de récolte selon une des revendications 1 à 10, **caractérisée en ce que**, au niveau du cadre de machine (4, 4'), au moins un capteur d'inclinaison (N) supplémentaire est prévu et son signal de sortie (22) au niveau de la commande programmable (14) est réuni avec les signaux de sortie (17, 18) des capteurs de pression (A, B).

12. Machine de récolte selon la revendication 11, **caractérisée en ce que** celle-ci présente une position théorique d'inclinaison (H) qui peut être fixée et, en cas de saisie d'écarts en particulier transversalement à celle-ci, les temps d'actionnement (Z) au niveau de la vanne proportionnelle (12) peuvent être reprogrammés ou modifiés au moyen de la commande (14).

13. Machine de récolte selon la revendication 11 ou 12, **caractérisée en ce que**, en cas de modification de l'inclinaison de la machine de récolte (1), la valeur théorique respective pour une valeur de seuil de suggestion (21) peut être reprogrammée de manière ciblée au moyen du programme de commande (14)

14. Machine de récolte selon une des revendications 1 à 13, **caractérisée en ce que** la commande (14) de la machine (1) est prévue avec un logiciel, selon lequel un automatisme d'inclinaison connu en soi est intégré en grande partie dans l'absorption des vibrations activable au moyen de l'au moins un vérin de réglage (8).

15. Machine de récolte selon une des revendications 1 à 14, **caractérisée en ce que**, au niveau du cadre de machine (4, 4'), plusieurs vérins de réglage sont prévus et reliés à la commande hydraulique (M) par des capteurs (A, B) et le programme de commande (14).
